# EUROPÄISCHE PATENTSCHRIFT

(11) **EP 2 170 214 B1**
(45) Veröffentlichungstag und Bekanntmachung des Hinweises auf die Patenterteilung: **22.05.2013**
(21) Anmeldenummer: 07819549.2
(22) Anmeldetag: 02.11.2007
(51) Int. Cl.: A61C 13/00, A61C 8/00

(54) **VERFAHREN UND VORRICHTUNG ZUR HERSTELLUNG EINES DENTALIMPLANTATES**
METHOD AND DEVICE FOR PRODUCING A DENTAL IMPLANT
PROCÉDÉ ET DISPOSITIF DE FABRICATION D'UN IMPLANT DENTAIRE

(30) Priorität: 21.06.2007 DE 102007029105
(43) Veröffentlichungstag der Anmeldung: 07.04.2010
(73) Patentinhaber: Zipprich, Holger, 64283 Darmstadt (DE)
(72) Erfinder: Zipprich, Holger, 64283 Darmstadt (DE)
(74) Vertreter: Tergau & Walkenhorst
(86) Internationale Anmeldenummer: PCT/EP2007/009525
(87) Internationale Veröffentlichungsnummer: WO 2008/154947

(56) Entgegenhaltungen:
- DE-C1- 19 633 570

## Beschreibung

Die Erfindung betrifft ein Verfahren zur Herstellung eines Dentalimplantates mit einem in einen Kieferknochen einbringbaren Pfostenteil und mit einem diesem zugeordneten Aufbauteil, an das ein Zahnersatzstück anbringbar ist und eine Indizierungsvorrichtung mit einem Laborimplantat zur Bearbeitung eines solchen Aufbauteils.

Dentalimplantate sind in vielfältigen Formen bekannt. Sie werden meist durch Einschrauben an Stelle eines extrahierten oder ausgefallen Zahnes in den Kieferknochen eingesetzt, um dort nach einer Einheilphase von drei bis vier Monaten ein als Zahnersatz dienendes prothetisches Aufbauteil oder eine Krone zu halten. Dazu ist ein derartiges Zahnimplantat üblicherweise als geeignet geformter Metallkörper ausgebildet und in der Art eines Stiftes geformt und weist am apikalen Ende ein zumeist selbstschneidendes Schraubengewinde auf, mit welchem der Stift in das entsprechend präparierte Implantatbett eingesetzt wird.

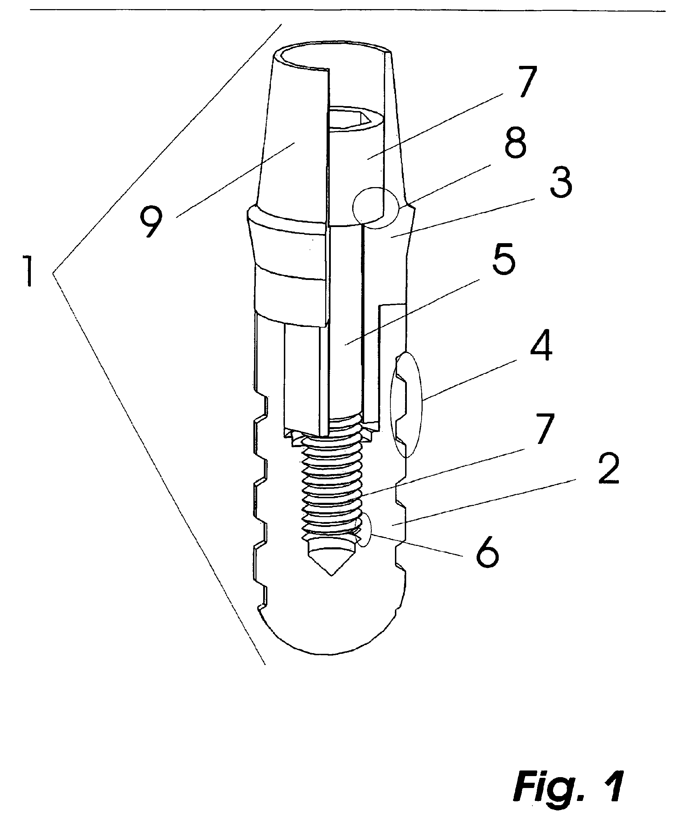

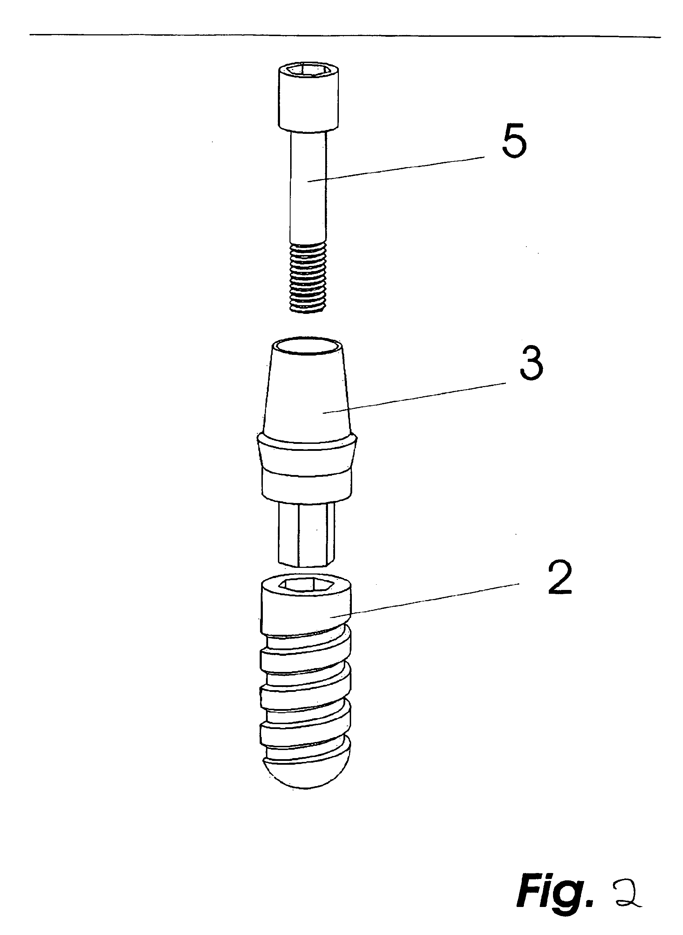

Ein Beispiel für ein Dentalimplantat der oben genannten Art ist in Fig. 1 in einer teilweisen Ansicht und teilweise in einem axialen Schnitt und in Fig. 2 als Explosionszeichnung gezeigt. Das zweiteilige Dentalimplantat 1 umfasst ein Pfostenteil 2 und ein Aufbauteil 3. Das Pfostenteil 2 besteht ebenso wie das Kopf- oder Aufbauteil 3 aus Metall oder einer Keramik, und zwar insbesondere aus Titan, einer Titanlegierung, einer titanhaltigen Legierung, einer Zirkonoxid-, Aluminiumoxidkeramik oder einer Keramik, die entweder Zirkonoxid oder Aluminiumoxid beinhaltet. Das Pfostenteil 2 ist von außen mit einem Gewinde 4 versehen, welches als selbst schneidendes oder als nicht selbst schneidendes Gewinde ausgeführt sein kann. Die Steigung des Gewindes kann gleichmäßig oder veränderlich ausgeführt sein. Die äußere Gestalt des Pfostenteils 2 kann auch ohne Gewinde mit und ohne mechanische Retentionshilfen ausgeführt sein. Über eine Verbindungsschraube 5 werden das Pfostenteil 2 und das Aufbauteil 3 miteinander verschraubt. Das Gewinde der Verbindungsschraube 5 wird dazu in ein Innengewinde 6 des Pfostenteils 2 eingeschraubt. Der Schraubenkopf 7 der Verbindungsschraube 5 presst beim Einschrauben der Verbindungsschraube 5 über die Stirnsenkung 8 des Aufbauteils 3 das Aufbauteil 3 auf das Pfostenteil 2.

Das Pfostenteil 2 wird in einem entsprechend aufbereiteten Implantatbett des Kieferknochens verankert. Die Gewindekonstruktion gewährleistet dabei eine hohe Primärstabilität und eine gleichmäßige Weiterleitung der bei Kaubelastung auftretenden Kräfte in den Kieferknochen. Das Aufbauteil 3 wird am oberen Bereich 9 mit einer Krone, einer anderen prothetischen Versorgung oder dergleichen in an sich bekannter Weise verbunden. Diese Verbindung kann als Verschraubung, Klemmung, konische Selbsthemmung, Unterdruck, Magnet, Kugelkopfsystem, Zementierung, Verklebung oder dergleichen ausgeführt sein.

Um einer Rotation oder Verdrehung zwischen dem Aufbauteil 3 und dem Pfostenteil 2 durch äußere Kräfte (meist bedingt durch die Kaubelastung) entgegen zu wirken, wird entweder eine mechanische Indizierung in Form einer mechanischen Sperre verwendet oder die Flächenpressung zwischen Aufbauteil 3 und dem Pfostenteil 2 geeignet gewählt.

Die zur Indizierung und zur Vermeidung der Rotation des Aufbauteils 3 auf dem Pfostenteil 2 verwendete mechanische Sperre kann in verschiedenen Varianten ausgeführt sein. Im Beispiel nach den Fig. 1 und 2 ist dazu ein Innensechskant im Postenteil 2 und einen Außensechskant am Aufbauteil 3 vorgesehen, wobei die Ausführung als Außen- und Innensechskant auch anders herum erfolgen kann. Die Anzahl der Kanten eines solchen Kantensystems kann variieren. Weiterhin können die Ecken solcher Kantsysteme mit einem Radius versehen sein. Als weitere Ausführungen sind Torx und Vielzahnsysteme mit variierender Elementanzahl, variierender Geometrie bekannt. Darüber hinaus sind in alternativer Ausgestaltung, wie in Fig. 3 gezeigt, Indizierungen mittels Einfräsungen 14 im Pfostenteil 2 und herausragender Elemente 15 oder Nocken am Aufbauteil 3 bekannt.

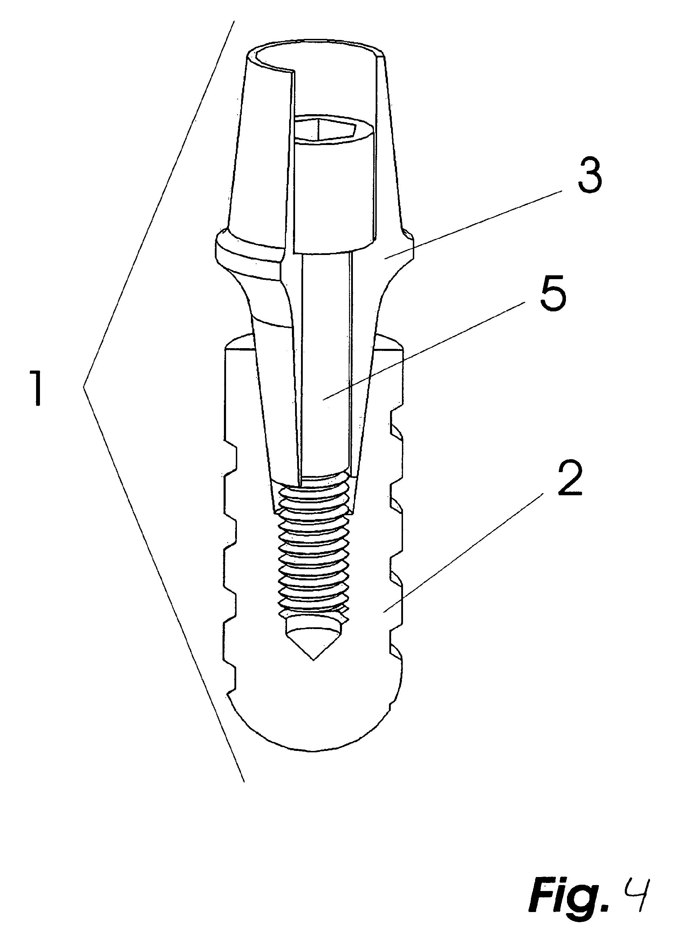

Dabei erfolgt die Vermeidung der Rotation zwischen dem Pfostenteil 2 und dem Aufbauteil 3 über die Anpresskraft der Verbindungsschraube. Zusätzlich oder alternativ kann die Verbindung zwischen dem Pfostenteil 2 und dem Aufbauteil 3 meist konisch ausgeführt sein. Insbesondere handelt es sich dabei um Ausführungen der in Fig. 4 dargestellten Art, die auf Grund des Konuswinkels und der Oberflächenreibung zwischen den konischen Kontaktflächen des Pfostenteils 2 und des Aufbauteils 3 beim Anziehen der Verbindungsschraube 5 über die konischen Kontaktstellen zwischen dem Pfostenteil 2 und dem Aufbauteil 3 als konische Hemmung bzw. konische Selbsthemmung ausgeführt sind.

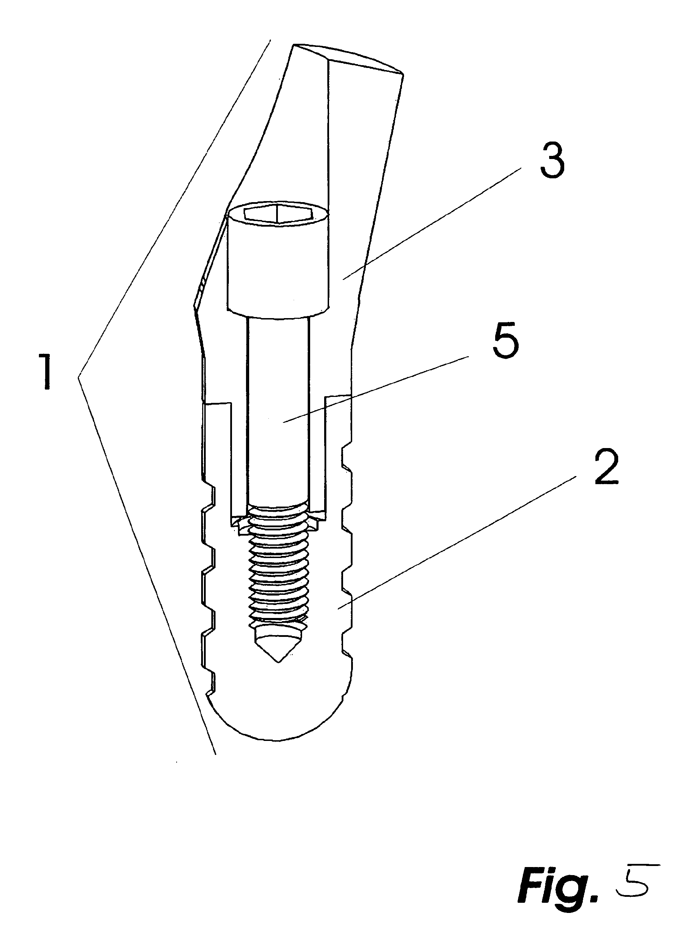

Abhängig von der Insertionsstelle (Frontzahn-, Seitenzahnbereich, Unterkiefer, Oberkiefer), der Knochensubstanz, der Restbezahnung, Verlauf und Position der Gefäße und Nerven ist es dem Behandler nicht immer möglich, die Bohrung für das Pfostenteil/Implantat übereinstimmend mit der Achse der prothetischen Versorgung (Krone oder dergleichen) zu bohren. Daraus folgt, dass ein gerade ausgeführtes Pfostenteil/Implantat und ein gerade ausgeführtes Aufbauteil nicht den anatomischen Gegebenheiten des Patienten genügen. Um diesem Problem entgegen zu wirken, werden abgewinkelte Aufbauteile verwendet (Fig. 5). Man bezeichnet abgewinkelte Aufbauteile auch als angulierte Aufbauteile. Fig. 5 zeigt ein Dentalimplantat 1 mit einem Pfostenteil 2 und einem abgewinkelten/angulierten Aufbauteil 3, wobei das Pfostenteil 2 und das angulierte Aufbauteil 3 über die Verbindungsschraube 5 miteinander verschraubt sind.

Üblicherweise liegt dieser Winkel zwischen 10° und 30°. Nach der Insertion, vorzugsweise nach der Einheilung der Pfostenteile, müssen zur Anfertigung der Krone, Brücke oder dergleichen die räumlichen und geometrischen Informationen der Restbezahnung (z. B. Antagonisten, mesial und distal der Insertionsstelle stehende Zähne), der Schleimhaut und des Pfostenteils/Implantats oder des montierten Aufbauteils erfasst werden. Diese räumlichen und geometrischen Informationen sind notwendig, um die Krone, Brücke oder dergleichen passgenau und anatomisch optimiert zu fertigen. Zu diesem Zweck wird eine Abformung, vorzugsweise aus Silikon oder einem anderen dentalen Abformmaterial, von der Mundsituation angefertigt. Diese Abformung wird vorzugsweise mit Gips oder einem anderen dentalen Modellwerkstoff ausgegossen. Dieses Gipsmodell ist ein Duplikat der Mundsituation des Patienten / der Patientin. Es liefert dem Zahnarzt und oder dem Zahntechniker die Informationen über die Position der Restbezahnung, der Schleimhaut und der inserierten Pfostenteile/Implantate.

Zur Verbesserung der Übertragung von Position und Geometrie der inserierten Pfostenteile/Implantate werden vorzugsweise spezielle Abformpfosten aus Metall und oder Kunststoff auf die inserierten Pfostenteil/Implantat gesteckt und oder geschraubt. Anschließend wird die Abformung im Mund vorzugsweise mit Silikon angefertigt. Nach der Aushärtung des Abformmaterials verbleiben der Abformpfosten bei der Andruckentnahme entweder auf dem Implantat oder werden mit der Abformung entnommen. Beim Ausgießen der Abformung muss der Abformpfosten/Aufbaupfosten in der Abformung platziert werden und mit einem Laborimplantat verbunden sein. Dieses Laborimplantat besitzt bezüglich der Verbindung und geometrisch in Richtung des Abformpfostens / Aufbaupfostens gleiche oder ähnliche geometrische Gestalt wie das inserierte Pfostenteil/Implantat. Nach dem Ausgießen der Abformung mit integriertem Abformpfosten/Aufbaupfosten und integriertem Laborimplantat erhält man ein Gipsmodell mit eingegossenem Laborimplantat.

Besitzt das verwendete Implantatsystem eine Indizierung, wurde diese vom Patientenmund auf das Gipsmodell übertragen. Basierend auf diesem Gipsmodell wird die prothetische Versorgung des Implantats / der Implantate geplant und gefertigt. Hierbei nimmt die rotatorische Position des Aufbauteils auf dem Implantat eine entscheidende Rolle ein. Besitzt das verwendete lmplantatsystem eine Indizierung, so sind die Positioniermöglichkeiten des Aufbauteils auf dem Laborimplantat begrenzt. Bei einer Sechskantverbindung sind es sechs Positioniermöglichkeiten. Bei einem Implantatsystem ohne Indizierung können alle Positionen zwischen 0° und 360° verwendet werden. Nach der Fertigung erfolgt meistens eine Anprobe im Patientenmund. Bei dieser Anprobe oder der endgültigen Eingliederung des prothetischen Zahnersatzes muss der Behandler das Aufbauteil /die Aufbauteile und alle weiteren prothetischen Elemente im Patientenmund in der gleichen Position wie auf dem Gipsmodell eingliedern.

Ist das inserierte Implantatsystem mit einer Indizierung ausgestattet, hat der Behandler eine begrenzte Anzahl an Wahlmöglichkeiten, um die gewünschte Position zu ermitteln. Existiert bei dem verwendeten Implantatsystem keine Indizierung, kann der Behandler nicht den Vorteil einer begrenzten Positionierung zur Ermittlung der gewünschten Position nutzen. Der Behandler muss die Information/-en über die gewünschte/-n rotatorische/-n Position/-en des/der Aufbauteils/- teile auf dem/den Implantat/-en auf einem anderen Weg ermitteln. Hierfür werden meist individuelle Schlüssel vom Zahntechniker angefertigt. Der individuelle Schlüssel wird auf die Aufbauteile / das Aufbauteil montiert und als gesamtes unter Zuhilfenahme der benachbarten Zähne und oder der benachbarten anatomischen Struktur auf die Implantate aufgesetzt. Nach dem Befestigen der Aufbauteile auf den Implantaten (Schrauben, Zementieren, etc.) kann der individuelle Schlüssel entfernt werden und die restliche Eingliederung der prothetischen Komponenten erfolgen. Schlussfolgernd lässt sich sagen, dass es zur optimierten Fertigung der prothetischen Komponenten vorteilhaft ist, wenn der Zahntechniker nicht durch eine Indizierung in der Verbindung des Aufbauteils und des Implantates in der Wahl der rotatorischen Positionierung eingeschränkt ist. Muss aber ein individueller Schlüssel angefertigt werden, ist dies für den Zahntechniker mit Aufwand und Kosten verbunden. Weiterhin ist es für den Behandler beim Eingliedern mit einem höheren Aufwand verbunden. Für den Zahnarzt ist es günstiger, wenn die Anzahl der Positioniermöglichkeiten des Aufbauteils auf dem Implantat so niedrig wie möglich ist. Angenehm sind 8-12 Möglichkeiten, vorteilhaft 3-5 Möglichkeiten, insbesondere aber 1-2 Positioniermöglichkeiten.

Es ist daher wünschenswert, dass der Zahntechniker eine rotatorische Bewegungsfreiheit des / der angulierten oder nicht angulierten Aufbauteils /-teile von 360° stufenlos nutzen kann, aber der Zahnarzt ohne Hilfsmittel für das Eingliedern des einteiligen oder mehrgeteilten Aufbauteils in der Art einer Indizierung nur eine geringe Zahl Positioniermöglichkeit auf dem Pfostenteil im Patientenmund hat, so dass ein aufwendiges Ausrichten und Positionieren während der eigentlichen Behandlung, also im Patientenmund, entfallen kann.

In der Offenbarung DE 19633570, worauf die zweiteilige form des Anspruchs 1 basiert, ist eine Indizierungsvorrichtung nach dem Oberbegriff des Anspruchs 1 beschrieben.

Der Erfindung liegt daher die Aufgabe zugrunde, ein Verfahren zur Herstellung eines Dentalimplantates der oben genannten Art anzugeben, welches es dem Zahntechniker erlaubt, eine einfache Indizierung des Aufbauteiles unter Rückgriff auf gängige Arbeitsschritte vorzunehmen.

Diese Aufgabe wird erfindungsgemäß durch die in Anspruch 1 angegebenen Merkmale gelöst, indem das Aufbauteil an seinem apikalen Ende zur Anpassung seines Außenquerschnitts an den Innenquerschnitt des Pfostenteils verformt wird.

Durch die Ausformung des okklusalen Endes des zweiten Aufbauteils wird neben der notwendigen Anschaffung der benötigten Werkzeuge ein weiterer zusätzlicher Arbeitsschritt des Zahntechnikers verlangt. In einer besonders günstigen Ausführungsform sollte daher der gewohnte Arbeitsablauf des Zahntechnikers nicht oder nur kaum beeinträchtigt und geändert werden. Dazu wird im Gipsmodell zur Ausarbeitung beispielsweise des Aufbauteils, der Suprastruktur, der Brücke oder der Krone ein Laborimplantat an der Stelle des in den Knochen eingebrachten Pfostenteils eingesetzt. Solche Laborimplantate sind gängiger Weise einteilig ausgeführt. Der Zahntechniker bringt das Aufbauteil in das Laborimplantat ein und kann in Abhängigkeit des Laborimplantats oder des Aufbauteils eine Indizierung nutzen oder nicht. Ist das Laborimplantat als spanabhebendes und oder formendes Werkzeug ausgeführt oder beinhaltet ein zusätzliches Werkzeug welches spanende und oder formende Eigenschaften besitzt kann die Indizierung beim Einschrauben bzw. beim Befestigen des Aufbauteils auf dem Laborimplantat erfolgen. In besonders vorteilhafter Ausführung ist daher das Laborimplantat mehrteilig ausgeführt.

Der Zahntechniker kann auf diese Weise die rotatorische Position des Aufbauteils relativ zu dem Pfostenteil festlegen und anschließend beim Befestigen, Fixieren, Einschrauben und oder Festschrauben des Aufbauteils die Indizierung an dem Aufbauteil anbringen bzw. fertigen. Um das Formen und oder das spanende Bearbeiten des Aufbauteils zu erleichtern kann an das Aufbauteil ein zusätzlichen Bauteil aus einem weicheren Material, vorzugsweise einem Kunststoff angebracht werden, welches vorzugsweise nur zur Indizierung genutzt wird.

Je nach Ausführungsform des Laborimplantates kann der Zahntechniker zunächst das Aufbauteil bis zur gewünschten Tiefe in das Laborimplantat einsetzen und anschließend die rotatorische Ausrichtung des Aufbauteils festlegen. Anschließend wird durch das verschrauben des Aufbauteils mit dem Laborimplantat ein entsprechendes Werkzeug zur formenden und/oder spanenden Behandlung des Aufbauteils von unten an dieses herangeführt. Dieses im Laborimplantat befindliche Werkzeug muss dabei in seiner formenden und/oder spanenden Ausführung auf die geometrischen Vorgaben der Indizierung im Pfostenteil abgestimmt sein. Die Indizierung des Pfosten- und Aufbauteils kann dabei so ausgestaltet sein, dass eine ein- oder mehrdeutige Positionierung des Aufbauteils auf dem Pfostenteil möglich ist.

Das im Laborimplantat eingebrachte Werkzeug ist im Laborimplantat rotatorisch gesichert. Dabei wird die Geometrie des Werkzeuges mittels eines Abformteiles bestimmt. Ein solches Abformteils überträgt die Geometrie des Innenquerschnitts des Pfostenteiles auf das im Laborimplantat befindliche Werkzeug. In besonders vorteilhafter Ausführung ist dabei das Abformteil in koronaler Richtung länger indiziert, als das eigentliche Pfostenteil. Es ist allerdings denkbar, dass auch andere Methoden zur Ausrichtung und Positionierung des Werkzeuges genutzt werden.

Das Laborimplantat kann dabei alternativ so ausgelegt sein, dass es selbst als bearbeitendes Werkzeug ausgeführt ist. Dabei besteht es vorzugsweise aus Metall, Hartmetall oder aus einer Keramik. Andernfalls ist das im Laborimplantat separat ausgeführte Werkzeug zur Herstellung der Indizierung vorzugsweise aus einem Metall, Hartmetall oder einer Keramik gefertigt. Zur leichteren Indizierung des Aufbauteils sind dabei die Schneiden des Werkzeuges angeschliffen und bestehen ihr Material weist einen Härtegrad auf, der höher ist als der von Titan Grad 5. Dabei kann, falls nicht das Laborimplantet selbst dafür ausgelegt ist als bearbeitendes Werkzeug zu dienen, das Werkzeug beweglich oder im oder am Laborimplantat durch eine lösbare oder unlösbare Verbindung fixiert sein.

In einer besonders anwenderfreundlichen Variation wird das formende und oder spanende Werkzeug von einer Feder in dem Laborimplantat gelagert. Das Werkzeug besitzt dabei vorzugsweise eine mittige Bohrung die über ein Gewinde verfügt. Befindet sich in dem Werkzeug kein Gewinde sollte das Werkzeug an seinem unteren, den schneidwerkzeugen abgewandten Ende mit einem weiteren Bauteil in dem sich ein Gewinde befindet verbunden sein. In dieses Gewinde kann das Aufbauteil in das Werkzeug geschraubt werden und bei weiterer Verstärkung der Verschraubung das Werkzeug spanend und/oder formend wirken.

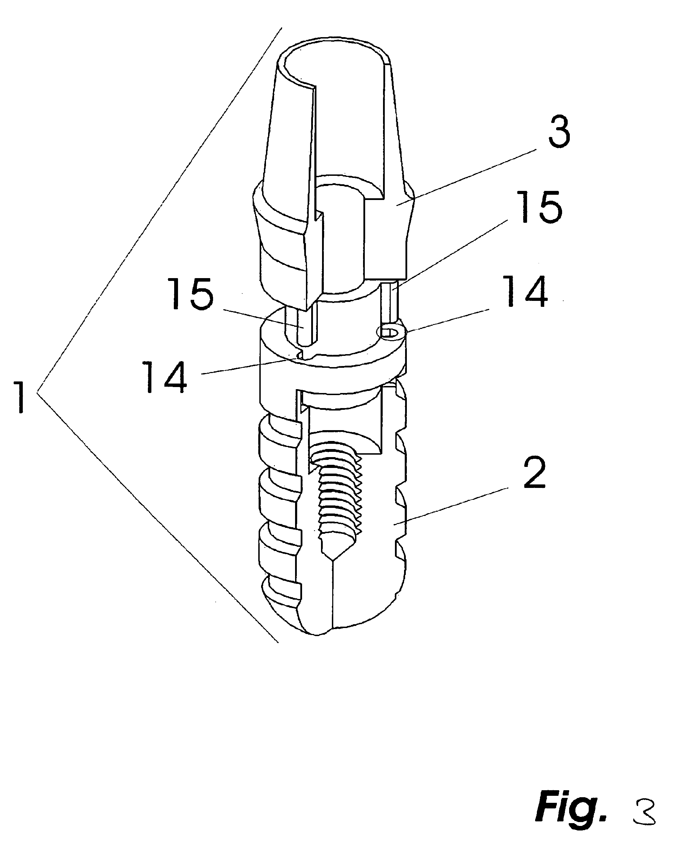

Zur absolut verwechslungsfreien Eingliederung des indizierten Aufbauteils ist eine eindeutige Zuordnung des Aufbauteils zum korrespondierenden Pfostenteil notwendig. Dies kann erreicht werden indem die Indizierung des Pfostenteil beim Formen des Aufbauteils vorzugsweise auf das Laborimplantat und oder ein zusätzliches Werkzeug welches translatorisch zur Laborimplantatsachse beweglich ist übertragen wird. Existieren eine Vielzahl von Positionierungsmöglichkeiten des Aufbauteils auf dem Pfostenteil besteht die Möglichkeit, dass der Behandler im Patientenmund nicht auf Anhieb die richtige Position findet. Es kann dabei eine Nachpositionierung im Patientmund notwendig werden. Der Behandler bringt das Aufbauteil teilweise in das Pfostenteil ein und muss anschließend das Aufbauteil drehen bis der Eingriff des Aufbauteils mit dem des Pfostenteils übereinstimmt und das Aufbauteil in die Endposition gebracht werden kann. Bei diesem Prozess besteht die Gefahr dass sich das Aufbauteil im Pfostenteil verkantet. Befinden sich mindestens drei Indizierungen im Pfostenteil und im Aufbauteil ist die Gefahr des Abkippens beim Eingliedern des Aufbauteils geringer und somit auch die Gefahr des Verkantens. Die Anzahl der Indizierungen und damit bei gleicher Winkelteilung der Indizierungen auch die Anzahl der Positioniermöglichkeiten ist vorzugsweise kleiner sechs und insbesondere genau drei. Um nur eine Positionierungsmöglichkeit des Aufbauteils auf dem Pfostenteil zuzulassen besteht auch die Möglichkeit mehr als eine Indizierung zu gestalten, vorzugsweise drei und die Winkelaufteilung nicht gleichmäßig zu wählen. In Fig. 3 sind die drei Indizierungen äquidistant über den Umfang des Pfostenteils bzw. des Aufbauteils verteilt und haben damit einen Versatz von 120°. Dabei ergeben sich für ein solches Aufbauteil 3 Positionierungsmöglichkeiten. Werden die Abstände ungleichmäßig aufgeilt (z.B. 100°, 110° und 150°) ergibt sich nur eine mögliche Positionierung des Aufbauteils auf dem Pfostenteil. Dies kann auch bei zwei oder mehr als drei Indizierungen erreicht werden.

Die Übertragung der Indizierungsposition des Pfostenteils auf das Laborimplantat im Gipsmodell wird mittels eines Abformpfostens mit fertig eingebrachter Indizierung durchgeführt. Ist die akpikal an den Abformpfosten angeformte Indizierung lediglich genauso lang wie das apikal an das Aufbauteil angeformte Rohr bzw. nach dem Formen indizierte Rohr kann der Abformpfosten beim eindrücken in das Laborimplantat nicht direkt in die Indizierung des beweglichen Werkzeugs eingreifen. Die Indizierung des Werkzeuges kann erst in das Aufbauteil eingreifen wenn das Werkzeug von der Kraft der Verbindungsschraube entgegen der Federkraft in Richtung des Abformteils bewegt wird. Hierbei besteht die Gefahr, dass das Abformteil verformt wird und die rotatorische Positionsübertragung verfälscht wird. Um dies zu vermeiden sollte die Indizierung des Abformteils länger gestaltet sein, als das zu indizierende Rohr, welches apikal an das Aufbauteil angeformt ist. Der Längenunterschied sollte mindestens 0,5mm, vorzugsweise größer 1 mm und bei einer besonders günstigen Variante größer als 2mm sein.

Ein Ausführungsbeispiel der Erfindung wird anhand einer Zeichnung näher erläutert. Darin zeigen:
- Fig. 1-5: jeweils ein Dentalimplantat nach dem Stand der Technik,

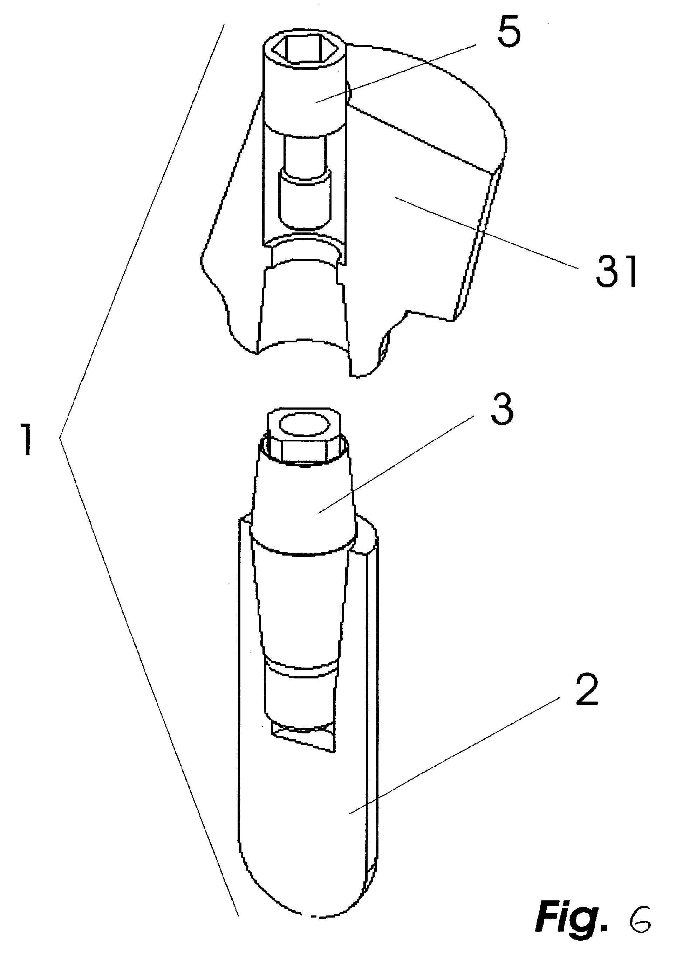

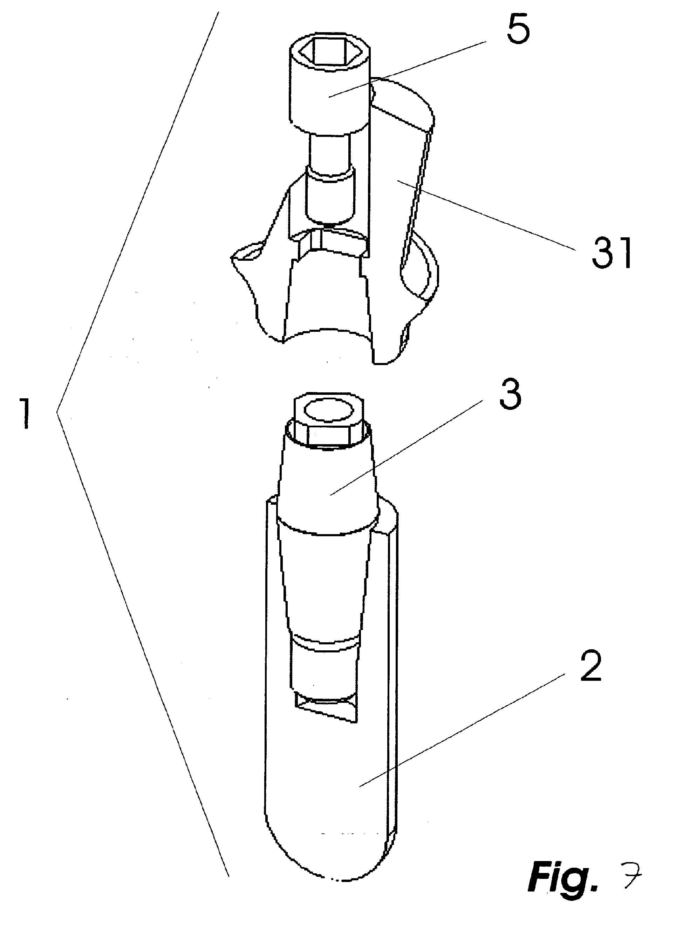

- Fig. 6,7: Dentalimplantat mit zweiteiligem Aufbauteil,

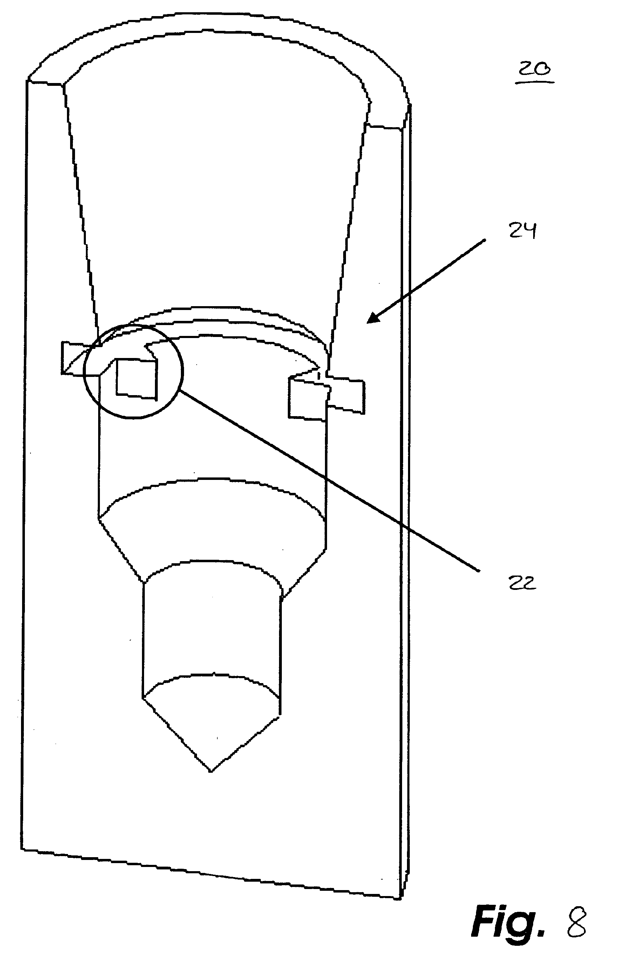

- Fig. 8: Laborimplantat mit integriertem Werkzeug,

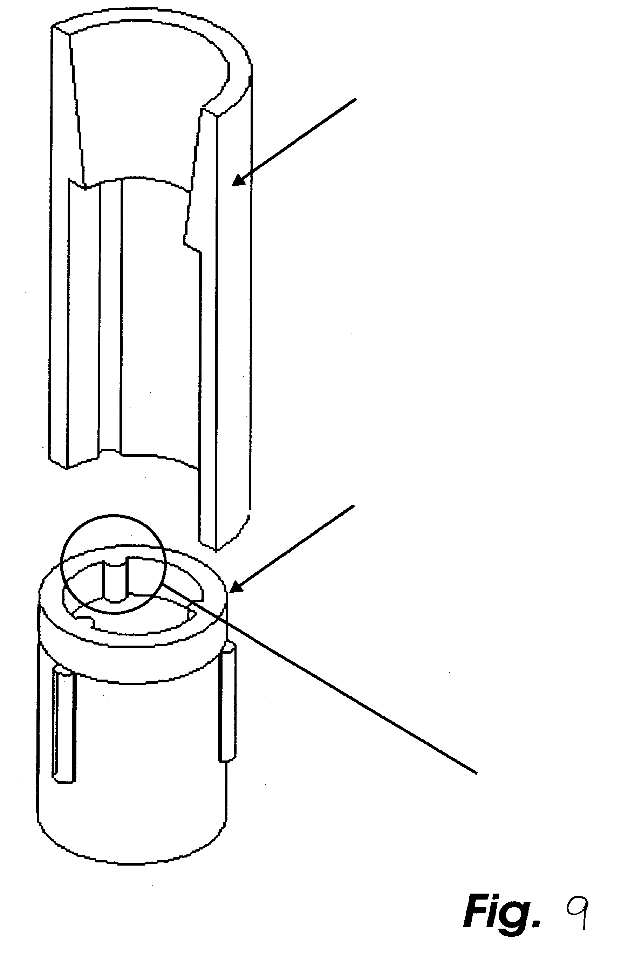

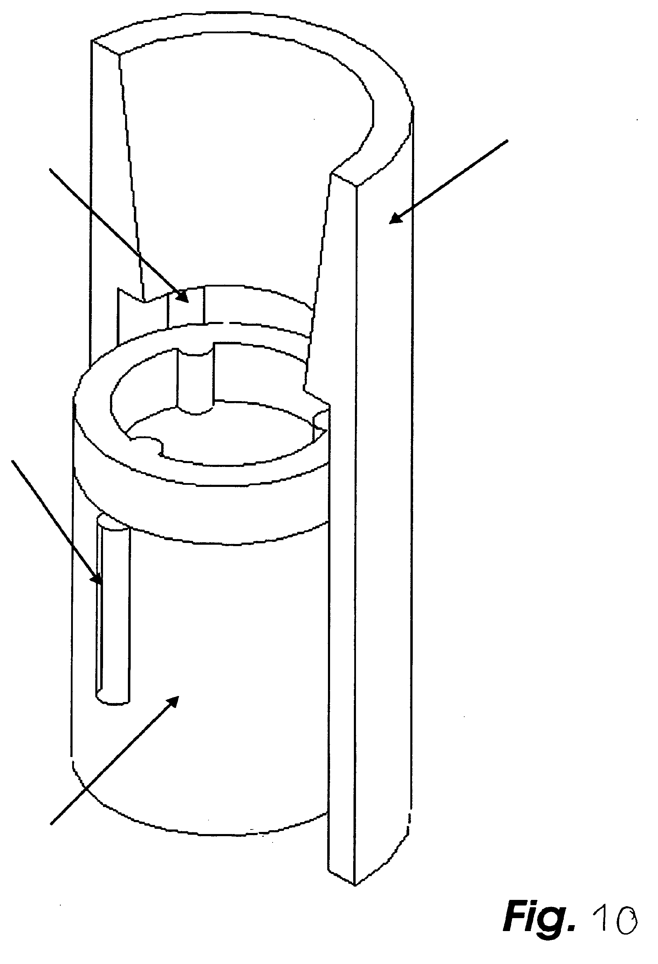

- Fig. 9,10: mehrteiliges Laborimplantat ,

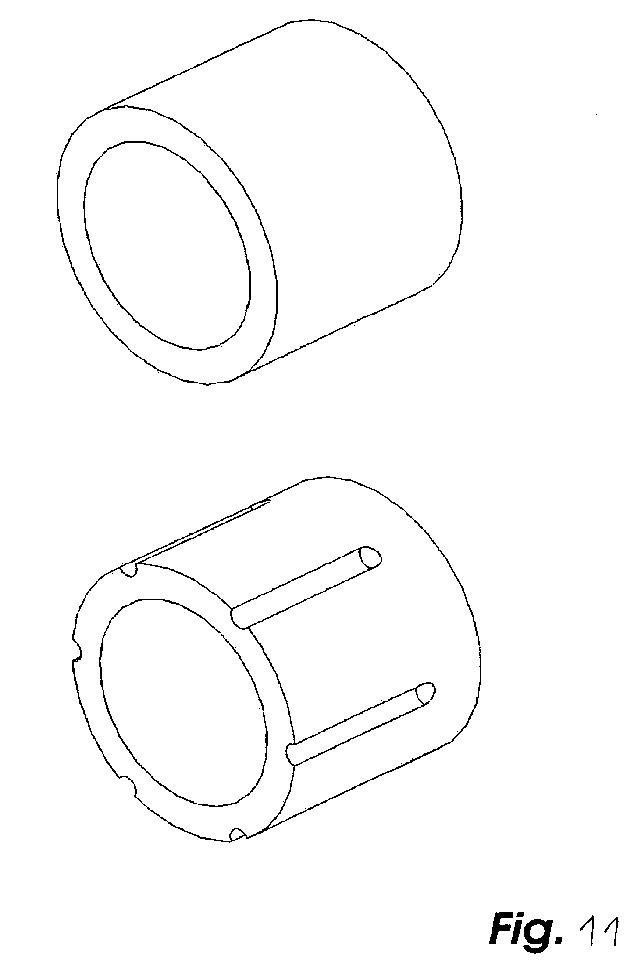

- Fig. 11: verformtes Rohr in einer Vorher-Nachher Zeichnung,

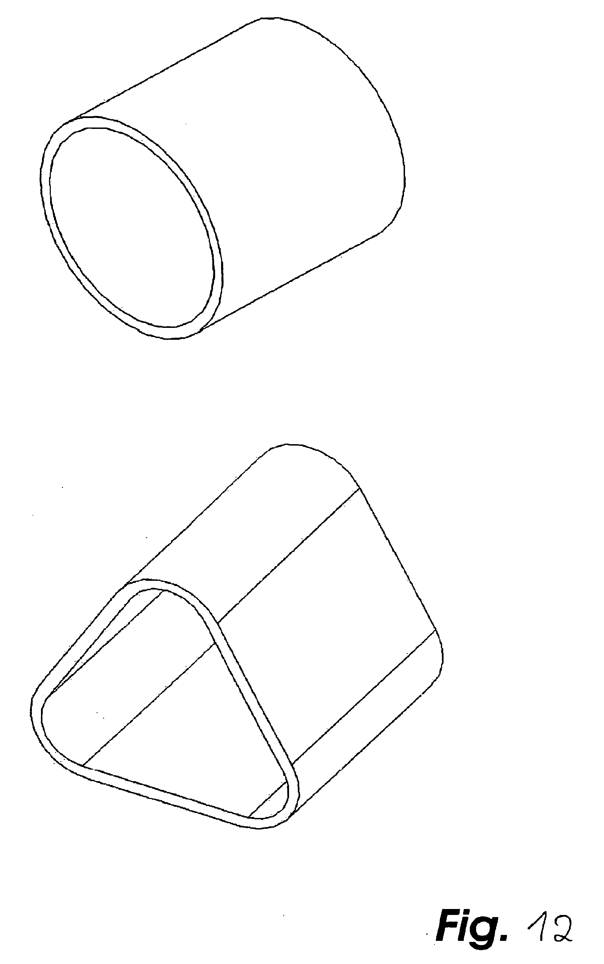

- Fig. 12: verformtes Rohr in einer Vorher-Nachher Zeichnung,

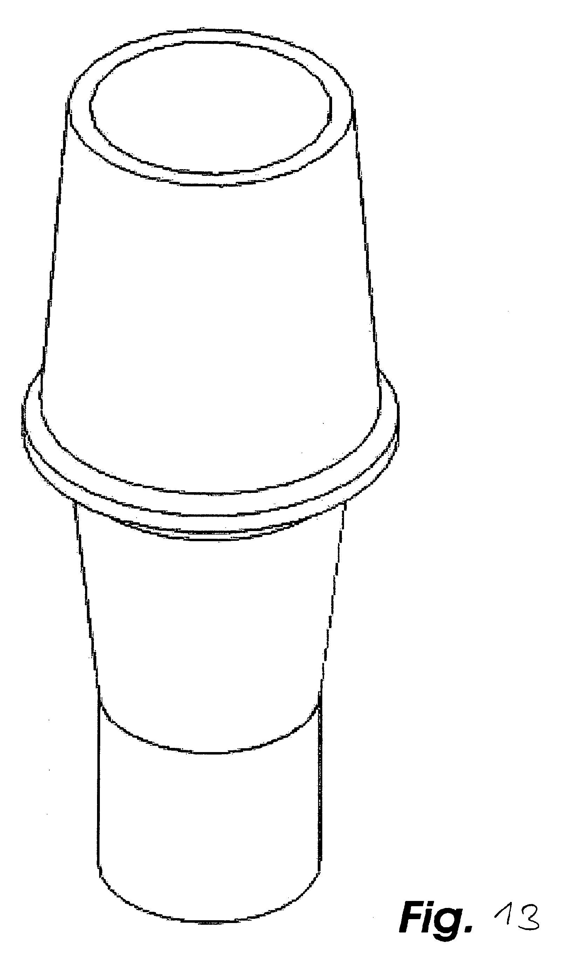

- Fig. 13-15: Aufbauteil mit verschiedenen apikalen Rohren,

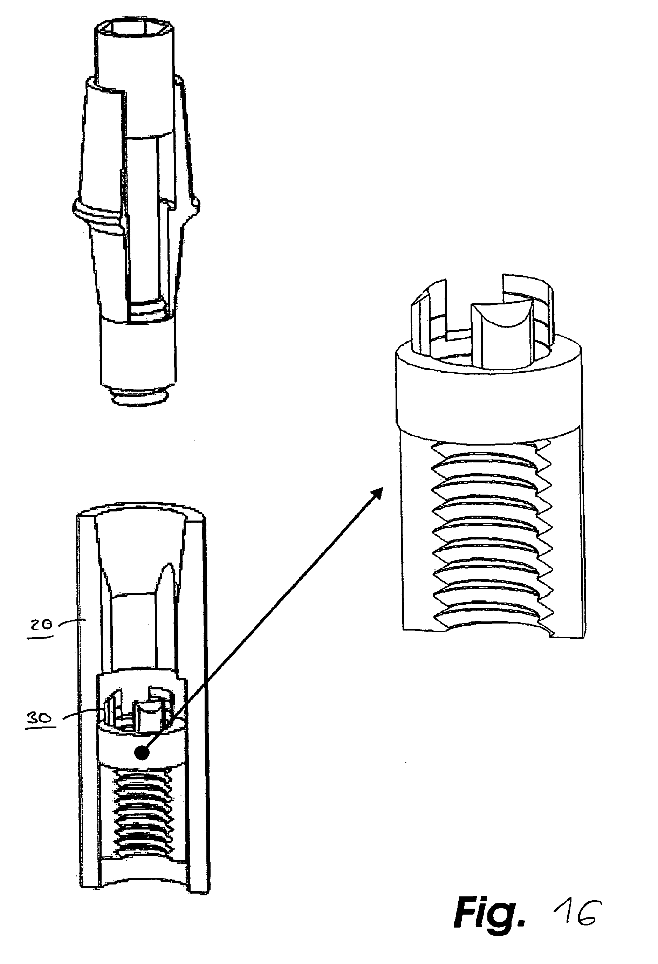

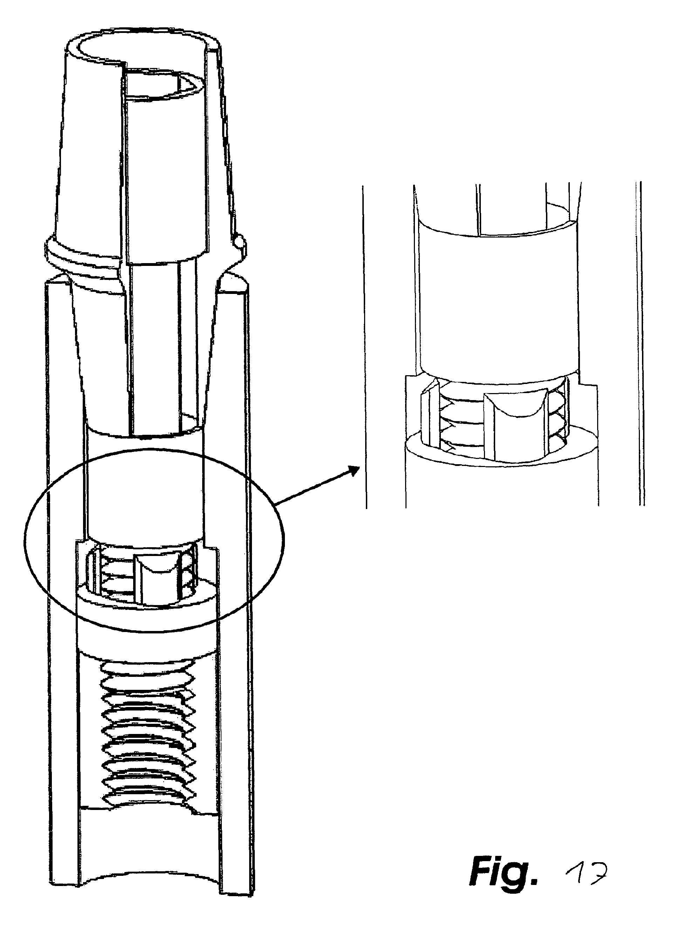

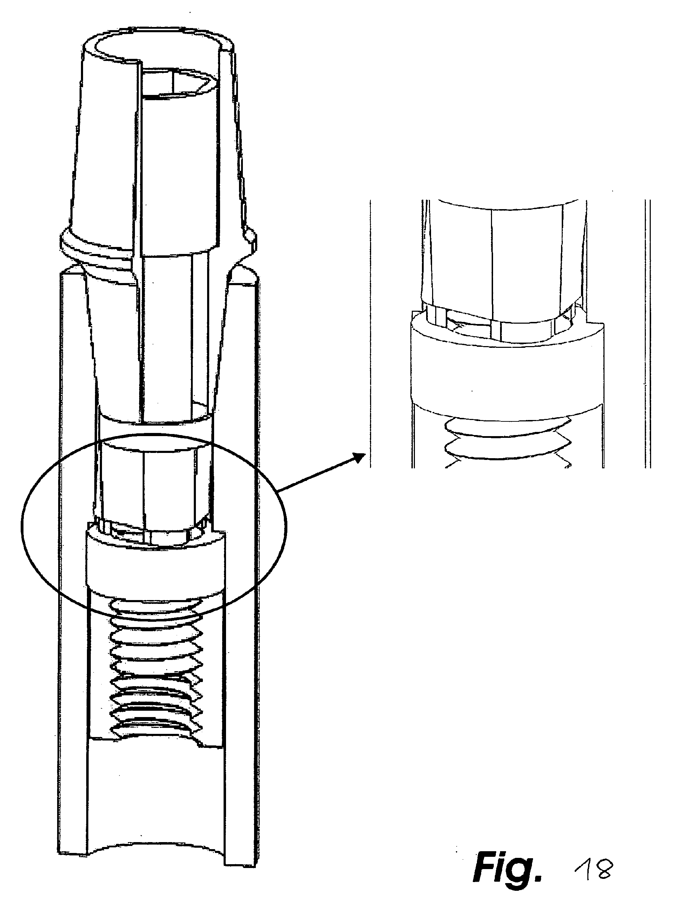

- Fig. 16-19: Vorgang des Formens des apikalen Rohres,

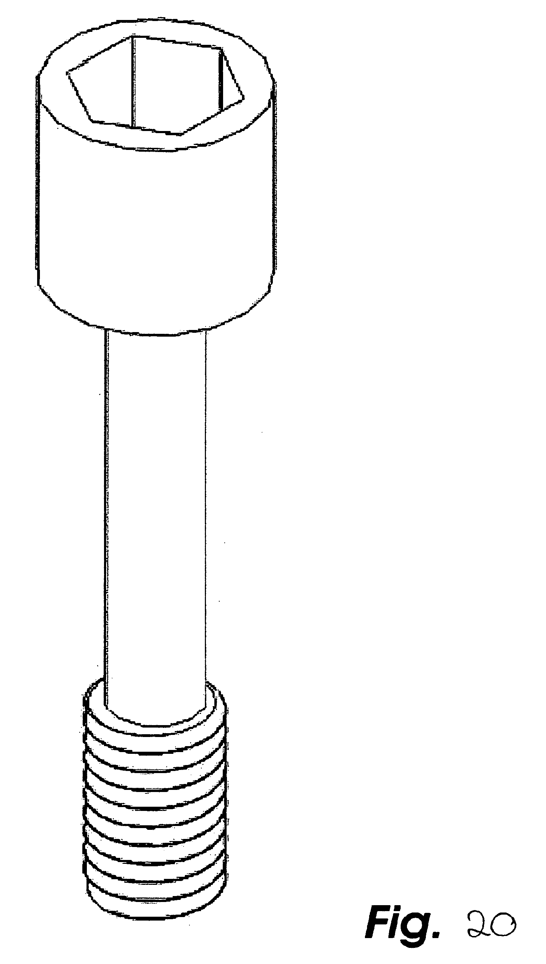

- Fig. 20: Schraube mit im Durchmesser reduziertem Gewindeschaft und

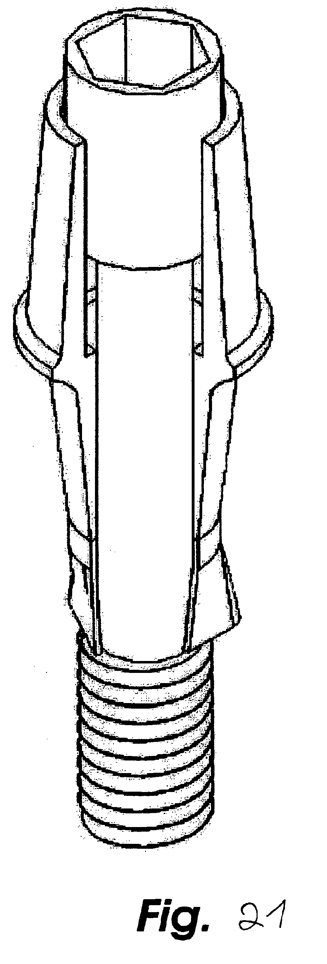

- Fig. 21: Aufbauteil mit Schraube

Gleiche Teile sind in allen Figuren mit denselben Bezugszeichen versehen.

Die bekannten Dentalimplantate gemäß den Fig. 1 bis 5 umfassen jeweils das in einen Kieferknochen einbringbare Pfostenteil 2 und ein diesem zugeordnetes Aufbauteil 3, an das ein Zahnersatzstück anbringbar ist. Im Gegensatz zu diesen bekannten Dentalimplantaten ist das erfindungsgemäße Dentalimplantat gemäß den Fig.1 bis 5 gezielt dafür ausgelegt, die rotatorische Positionierung des oberen Implantataufbaus, insbesondere des anzubringenden Zahnersatzstücks, in Bezug auf die Längsachse des Pfostenteils 2 zwar grundsätzlich frei wählen zu können, diese aber in einem ersten Bearbeitungsschritt außerhalb des Patientenmundes und somit unabhängig vom eigentlichen Einsetzen des Implantats vornehmen zu können. Dabei ist angestrebt, dass ein Zahntechniker im Labor in der Art einer geeigneten Vorabanfertigung die rotatorische Einstellung der oberen Implantataufbaus abhängig von der zuvor vom Patientenmund abgenommenen und somit bedarfsgerecht ausgerichteten gewünschten Orientierung endgültig festlegt. Dabei sollen beim Einbringen des Implantats in den Patientenmund in der Art einer Indizierung nur noch eine geringe Anzahl von Positionierungen möglich sein, so dass der Zahnarzt beim Eingliedern des Zahnersatzes automatisch die richtige Positionierung wählt und somit ein aufwändiges Feinjustieren oder dergleichen während der Behandlung im Patientenmund nicht erforderlich ist. Zu diesem Zweck wird im Labor das Aufbauteil 3 entsprechend der Indizierung des im Kiefer des Patienten angebrachten Pfostenteils am apikalen Ende entsprechen bearbeitet.

Verfügt das im Kiefer des Patienten eingesetzte Pfostenteil über keine Indizierungsmöglichkeiten wird in der Ausführungsvariante der Fig. 6 und Fig. 7, zunächst ein erstes Aufbauteil in das Pfostenteil des Patientenmundes eingeschraubt. Dieses erste Aufbauteil ist oklussal derart ausgeformt, dass es eine Indizierung des auf in aufgeschraubten zweiten Aufbauteils ermöglicht. Dabei ist beispielsweise eine vierkant oder sechskant ausgeformtes okklusales Ende des ersten Aufbauteils denkbar. Für die Verarbeitung und Ausrichtung des zweiten Ausbauteils wird zunächst ein Gipsmodel des Pfostenteils mit aufgeschraubtem ersten Aufbauteil erstellt. Der Zahntechniker kann anschließend im Labor, also außerhalb des Patientenmundes, die Position und Ausrichtung des zweiten Aufbauteils festlegen, indem er in das apikale Ende des zweiten Aufbauteils die zum ersten Ausbauteil korrespondierenden Ausformungen einarbeitet. Dies kann mittels spanabhebender, formgebender oder stanzender Werkzeugen erreicht werden. Ein solch bearbeitetes zweites Aufbauteil vereinfacht die Ausrichtung des Aufbauteils im Patientenmund, da in Abhängigkeit der Indizierung nur eine begrenzte Anzahl von Möglichkeiten zur Verfügung stehen. Des Weiteren kann sich nach dem einschrauben des zweiten Aufbauteils in das erste Aufbauteil dieses nicht mehr im Patientenmund drehen.

Das in Fig. 6 dargestellte zweite Aufbauteil verfügt noch nicht über die zum ersten Aufbauteil korrespondierende Ausformung und ist daher auch nach einsetzen in den Patientenmund in der Lage sich rotatorisch in Relation zum Pfostenteil und damit zum gesamten Kiefer zu verschieben. Des Weiteren ist eine Feinjustierung der rotatorischen Orientierung durch den behandelnden Arzt während der Behandlung im Patientenmund notwendig. Dagegen verfügt das in Fig. 7 dargestellte zweite Aufbauteil über eine entsprechende Ausformung, welche, eingesetzt und verschraubt in das erste Aufbauteil, eine rotatorische Bewegung der zweiten Aufbauteils verhindert.

Das Ausführungsbeispiel nach Fig. 8 zeigt ein einteiliges Laborimplantat, welches ein zur Indizierung verwendetes Werkzeug umfasst. Dieses Werkzeug ist im Ausführungsbeispiel nach Fig. 8 zur spanabhendenen Behandlung des Aufbauteils ausgelegt, könnte aber auch ein formendes Werkzeug sein. Durch ein einsetzen eines Aufbauteils in den Führungsschacht des Laborimplantates und späteres verschrauben, wird das Aufbauteil durch das Werkzeug bearbeitet und somit entsprechend Indiziert.

In Fig. 9 ist eine Explosionszeichnung eines mehrteiligen Laborimplantats gezeigt. Die Außenhülle des Laborimlantates ist dabei zur besseren Darstellung in einem axialen Schnitt dargestellt. Das Laborimplantat verfügt dabei über ein zur Laborimplantatsachse verschiebbares Werkzeug, welches mit einer Anzahl von im Ausführungsbeispiel verformenden Elementen versehen ist. Es ist aber auch denkbar, dass das Werkzeug zusätzlich oder ausschließlich zerspanende Elemente enthält. Das Ausführungsbeispiel nach Fig. 10 zeigt ein mehrteiliges Laborimplantat in einem axialen Schnitt. Ausformungen an der Außenseite des Werkzeuges greifen beim einsetzen in die Außenhülle des Laborimplantates in dafür vorgesehen Ausformungen an der Innenseite der Außenhülle. Dadurch wird eine Drehung des Werkzeuges um die Laborimplantatsachse verhindert.

Wird die Indizierung des Aufbauteils über einen formenden Prozess erreicht, ergeben sich in Abhängigkeit des plastischen Verformungsgrades zwei Anwendungsmöglichkeiten. Bei einem formenden Prozess mit starkem plastischen Verformungsgrad basiert die hauptsächliche Verformung des Bauteils darauf, dass das formende bzw. formgebende Werkzeug in die Oberfläche eindringt und dadurch das dort befindliche Material verdrängt wird. Dies führt zu einer teilweisen Verdichtung des verformten Materials. Ein Ausführungsbeispiel eins verformten Rohres mit einem starken plastischen Verformungsgrad ist in einer Vorher-Nachher Zeichnung in Fig. 11 dargestellt. Bei einem formenden Prozess mit niedrigem plastischen Verformungsgrad basiert die hauptsächliche Verformung des Bauteils darauf, dass zu formende Material durch das Werkzeug gebogen bzw. um ein zweites Werkzeug herum gelegt wird. Eine Verdichtung des Materials erfolgt in der Regel nicht. Dabei ist denkbar, dass das zu bearbeitende Rohr in ein formgebendes Werkzeug mit beispielsweise einer runden, symmetrischen oder anderen Innengeometrie eindringt oder dieses Rohr über ein Werkzeug mit einer entsprechend ausgestalteten Außengeometrie geschoben wird. Das Ausführungsbeispiel eines verformten Rohres mit niedrigen plastischen Verformungsgrad ist in einer Vorher-Nachher Zeichnung in Fig. 12 dargestellt.

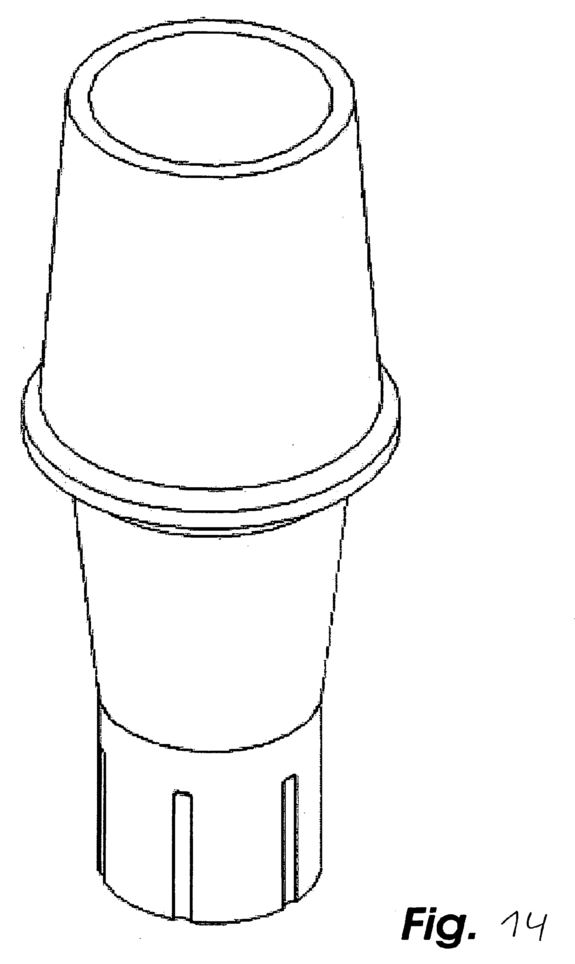

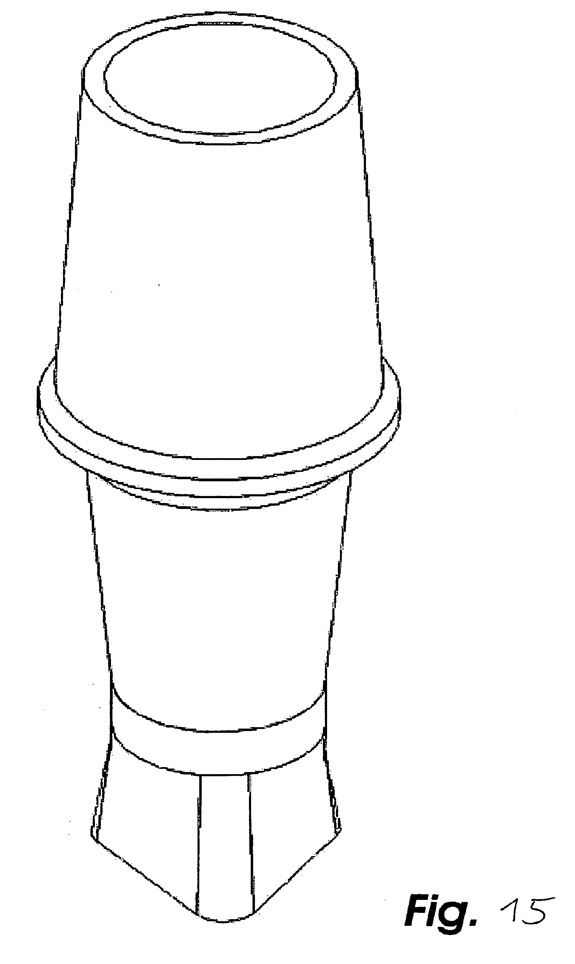

Zur Indizierung eines Aufbauteils in Relation zu einem Pfostenteil kann daher ein variabel gestaltetes Rohr mit runder, eckiger oder anderer Außengeometrie apikal an das Aufbauteil angeformt werden. Ein solches Aufbauteil ist in Fig. 13 dargestellt. Dieses Rohr kann unter Zuhilfenahme eines oder mehrerer formenden Werkzeuge geformt und somit gegenüber einem Pfostenteil indiziert werden. In den in Fig. 14 und Fig. 15 dargestellten Aufbauteile ist das apikal angeformte Rohr zum einen durch einen formenden Prozess mit starken plastischen Verformungsgrad (Fig. 14) und zum einen durch einen formenden Prozess mit niedrigen plastischen Verformungsgrad (Fig. 15) bearbeitet worden.

Die zur Indizierung des Aufbauteils benötigte Energie kann dabei beispielsweise in Form von elektrischer Energie, mechanischer Energie durch beispielsweise Über- und Unterdrucksysteme, rotatorische und oder translatorische Auslenkungen oder durch Muskelkraft des Zahntechnikers bereitgestellt werden. Zur Vermeidung eines zusätzlichen zu beschaffenden Gerätes und eines weiteren im Standardablauf zur Erstellung eines Dentalimplantates nicht enthaltenen Arbeitsschrittes ist daher eine Integration der Indizierung in bestehende Werkzeuge oder Arbeitsschritte besonders günstig. Dadurch können sowohl die Kosten der benötigten Geräte und Materialien, als auch die Arbeitszeit des Zahntechnikers vermindert werden, was zu einer höheren Anerkennung im Dental- bzw. Implantologliemarkt führen kann. Eine solche Integration der Indizierung in den üblichen Arbeitsablauf des Zahntechnikers ist sollte daher vorzugsweise bei der Befestigung des Aufbauteils in dem Laborimplantat zur weiteren Bearbeitung der Suprastruktur erfolgen. Das Laborimplantat ist dabei gezielt als einteiliges oder mehrteiliges formendes oder spanabhebendes Werkzeug ausgestaltet. Dabei kann das Werkzeug starr mit dem Laborimplantat verbunden sein oder in dieses integriert sein oder auch beweglich mit diesem verbunden sein. Das Aufbauteil wird vor der Bearbeitung der Suprastruktur in einem auf solche Weise ausgestalteten Laborimplantat in Richtung der Laborimplantatsachse lösbar bis zu einem endgültigen Anschlag oder Endposition eingesetzt, rotatorisch ausgerichtet und lösbar mit dem Laborimplantat durch eine Schraub- oder Klemmverbindung verbunden. Die dabei aufgebrachte mechanische Energie beim einschrauben, einschlagen oder beispielsweise eindrücken wird dabei gezielt dazu verwendet, die Indizierung des Aufbauteils oder des apikal angeformten Rohres zu erreichen. Vorzugsweise verfügt das Laborimplantat dabei über mindestens ein bewegliches Werkzeug.

In den meisten Fällen wird das Aufbauteil entweder direkt, in Form eines apikal angeformten Gewindeteils, oder über eine Verbindungsschraube mit dem Pfostenteil verschraubt. Wenn die zur Formung der Indizierung benötigte Kraft durch die mechanische Arbeit während des Einschraubvorgang erzeugt wird, ergeben sich Einschränkungen in der Größe der nutzbaren Kraft aufgrund der systembedingten Dimensionierungen des Aufbauteils. Die Verbindungsschrauben haben dabei einen Durchmesser von ca. 1 mm bis 2,5mm oder maximal bis 3mm. Daraus folgt, dass der zu erzielende Verformungsgrad relativ gering ist. Bei der Verformung mit starkem plastischen Verformungsgrad bedeutet dies, dass das bearbeitende Werkzeug nur geringfügig (kleiner 0,5mm, kleiner 0,3mm, kleiner 0,1 mm oder kleiner 0,1 mm) in die Oberfläche eindringen kann. Bei der Verformung mit niedrigem plastischen Verformungsgrad bedeutet dies, dass das zu formende Material nur eine geringe Wandstärke (kleiner 0,3mm; vorteilhafter weise kleiner gleich 0,2mm und insbesondere kleiner gleich 0,1mm) aufweisen kann. Bei einer solchen Indizierung des Aufbauteils mit nur geringer Wandstärke oder geringer Ausformung kann es allerdings bei Einwirkung von Kräften zu einer Verminderung des Rotationsschutzes des Aufbauteils kommen, da die Gefahr einer Beschädigung der Indizierung und des Aufbauteils erhöht ist. Auch bei einem Abkippen des Aufbauteils durch einwirkende Kräfte, werden diese von der Verbindungsschraube auf den apikal angeordneten, indizierten Teil des Aufbauteils übertragen und können somit zu einem Bruch des apikalen Endes des Ausfbauteils führen.

Die Verbindung des Pfostenteils mit dem Aufbauteil ist bei vielen Implantatsystemen an der Kontaktstelle zwischen Pfostenteil und Aufbauteil als stumpfe Verbindung zweier ineinandergreifender Aus- bzw. Anformungen vorgsehen ( siehe Fig. 1 und Fig. 2). In solchen Systeme dient die Indizierung meist auch als Rotationsschutz des Aufbauteils gegen ungewünschte Verdrehung im Patientenmund. Dieser Rotationsschutz kann alternativ oder zusätzlich durch eine deutlich höhere Vorspannung der Verbindungsschraube erreicht werden. Die dafür nötige Erhöhung der Vorspannung ist allerdings bei dem momentanen Entwicklungsstand mit einer Titanschraube oder einer Schraube aus einer Titanlegierung bei den im Mund auftretenden Belastungen nicht oder nur eingeschränkt möglich. Ein zuverlässiger Rotationsschutz kann dabei über eine konische Ausgestaltung der Kontaktflächen zwischen Pfostenteil und Aufbauteil erfolgen (Fig. 4). Die durch diese konische Ausgestaltung erhöhte Haftreibung und das Spaltfreie Ineinandergreifen von Pfostenteil und Aufbauteil verhindert Relativbewegungen zwischen Aufbauteil und Pfostenteil bei den normalerweise oral auftretenden Belastungen. Das bedeutet, dass die am Aufbauteil apikal ausgeformte Indizierung zum Pfostenteil nur als Übertragungs- und Positionierhilfe dient und keine bzw. kaum Kräften und oder Momenten ausgesetzt wird. Somit hat sich die Gestaltung eines apikal an das Aufbauteil angeformten Rohres, welches vorzugsweise eine geringe Wandstärke (kleiner 0,3mm, vorteilhafter weise kleiner gleich 0,2mm und insbesondere kleiner gleich 0,1mm) aufweist und welches durch eine plastische Verformung (Kalt- und oder Warmverformung) so verformt wird, dass es gegenüber dem Postenteil als Indizierung genutzt werden kann, in Kombination mit einer konischen Verbindung zwischen Pfostenteil und Aufbauteil als besonders günstig erwiesen.

Die Kombination einer variablen Indizierung mit einer am Aufbauteil gestalteten konischen Verbindung zum Pfostenteil bzw. dem Laborimplantat erweist sich als besonders günstig, da mittels der konischen Verbindung das Aufbauteil selbst zentrierend und somit sehr präzise auf dem Laborimplantat fixiert werden kann. Um diesen Prozess weiter zu begünstigen wird das bewegliche im Laborimplantat mittels einer Mechanik und vorzugsweise mittels einer Feder in apikale Richtung gedrückt bzw. apikal positioniert. Nach dem Einsetzen des Aufbauteils in das Laborimplantat wird das Aufbauteil beim Anziehen der Verbindungsschraube bedingt durch die Federkraft in das Laborimplantat hineingezogen und zentriert sich somit im Laborimplantat eigenständig. Durch das Anziehen der Verbindungsschraube bewegt sich das translatorisch in Richtung der Laborimplantatsachse bewegliche Werkzeug aus apikaler Richtung auf das Aufbauteil zu. Bei geeigneter Dimensionierung der Federkonstante wird das Aufbauteil zuerst mit einer Kraft von mindestens 10N, vorzugsweise größer 20N und insbesondere größer 40N in das Laborimplantat hineingedrückt, bevor mit steigender Kraft durch das Anziehen der Verbindungsschraube das Formen des apikal an das Aufbauteil angeformten Rohres beginnt. Das Laborimplantat und/oder das Aufbauteil besitzt dabei einen Anschlag an den das bewegliche Werkzeug anstößt um mit weiterem Anziehen der Verbindungsschraube eine Zerstörung eines der Bauteile zu verhindern. Wird für die Verbindungsschraube und das bewegliche Werkzeug im Laborimplantat ein Feingewinde verwendet, also ein Gewinde mit einer geringeren Steigung als es bei üblichen (z.B. nach DIN) Schrauben verwendeten wird, kann die Kraft, die zur Formung des Aufbauteils verwendet wird, deutlich gesteigert werden. Ein solches Feingewinde kann dann dabei auch im Pfostenteil verwendet werden. Die Indizierung des Aufbauteils durch ein im Laborimplantat integriertes Werkzeug wird im Ausführungsbeispiel in Fig. 16 bis Fig. 19 dargestellt.

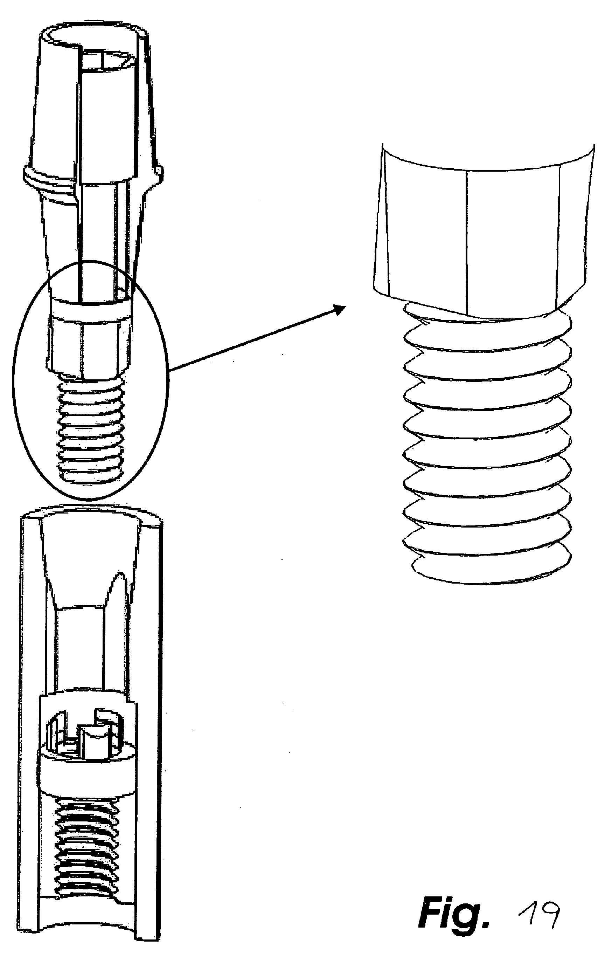

Durch eine geeignete Dimensionierung des Innendurchmessers des an das Aufbauteil angeformten Rohres auf den Schraubenschaftdurchmesser kann ein weiterer Vorteil bei der Eingliederung des Aufbauteils in das Pfostenteil im Patientenmund erreicht werden. Vorraussetzung hierfür ist dass der Schraubenschaft im Durchmesser im Verhältnis zum Gewindeaußendurchmesser kleiner ist. Vorzugsweise wird er auf den Durchmesser des Gewindekerns oder geringfügig kleiner als dieser dimensioniert. Eine solche Verbindungsschraube ist in Fig. 20 dargestellt. Bei dem in Fig. 21 dargestellten Aufbauteil mit eingesetzter Verbindungsschraube ist der Durchmesser des apikal angeformten Rohres kleiner als der Gewindedurchmesser der Verbindungsschraube. Dies wird erreicht indem die Form des apikal angeformten Rohres verändert wird. Dies geschieht beispielsweise durch Verformung des ursprünglich runden Rohres in ein dreieckiges Rohr mit abgerundeten Ecken. Dadurch wird die Durchtrittsfläche des Rohres verkleinert. Eine aus Fig. 19 vor dem Formen in das Aufbauteil eingesetzte Verbindungsschraube lässt sich nach der Verfomrung dadurch nicht mehr zerstörungsfrei aus dem Aufbauteil entfernen. Gewindeaußendurchmesser und Schaftdurchmesser der Verbindungsschraube müssen auf die Geometrie und den Durchmesser des Rohres vor und nach der Verformung abgestimmt werden, damit die Schraube vor der Verformung des Rohres in das Aufbauteil einsetzbar ist, nach der Verformung aber nicht mehr entfallen kann trotzdem aber drehbar gelagert ist. Auf diese Weise kann die Verbindungsschraube gegen ungewolltes Herausfallen aus dem Aufbauteil und ein eventuelles Verschlucken dieser durch den Patienten bei der Anprobe, der Eingliederung oder der Demontage gesichert werden.

Das apikal an das Aufbauteil angeformte Rohr besteht vorzugsweise zusammen mit dem Aufbauteil aus einem Teil und ist vorzugsweise aus einem zusammenhängenden Rohling oder Halbzeug gefertigt. Das Rohr kann aber auch abweichend vom restlichen Aufbauteil aus einem anderen Metall und/oder aus einem anderen Halbmetall und/oder aus einem Nichtmetall bestehen. Vorzugsweise ist das Material des Rohres dann weicher als das des Aufbauteils. Besteht das apikal an das Aufbauteil angerachte Rohr aus einem anderen Bauteil und/oder einem anderen Material kann diese beispielsweise mittels Verschraubung, Vernietung, Verklemmung, Verklebung, Verlötung oder Verschweißung am Aufbauteil befestigt sein.

Um eine reproduzierbare Formgestaltung des apikal an das Aufbauteil angeformten Rohres bzw. des Aufbauteils selber zu gewährleisten, sollte das im Laborimplantat bewegliche Werkzeug und oder das Laborimplantat selbst aus einem härteren Material bestehen als das Aufbauteil und oder das an das Aufbauteil angeformte Rohr. Vorzugsweise sind einzelne Werkzeuge des Laborimplantats oder das Laborimplantat selbst insbesondere aber das bewegliche Werkzeug nach deren formgebender Herstellung zusätzlich einem Härtesteigernden Prozess unterzogen. Diese Härtung kann oberflächlich sein und nur einen Teil oder das gesamte Werkzeug betreffen. Durch die Verwendung von härteren Materialien kann beim Formen des Rohres vermieden werden dass das im Laborimplantat bewegliche Werkzeug oder das Laborimplantat selbst sich verformen oder eine nennenswerte Abrasion aufweist. Hierdurch kann das Laborimplantat mehrfach verwendet werden und die Reproduzierbarkeit der geformten Endgeometrie des Rohres verbessert werden.

## Patentansprüche

1. Indizierungsvorrichtung zur Indizierung eines Aufbauteils (3), an das ein Zahnersatzstück anbringbar ist, in Abhängigkeit von einem in einen Kieferknochen einbringbaren Pfostenteil (2), **gekennzeichnet durch** ein in ein Positivmodell der Mundsituation des Patienten eingebettetes, bezüglich der Verbindung und geometrisch eine dem in dem Kieferknochen inserierten Pfostenteil entsprechende Gestalt aufweisendes Laborimplantat (20), und **durch** ein sich im Laborimplantat (20) befindendes und zur Bearbeitung des Außenquerschnitts des in das Laborimplantat (20) einbringbaren Aufbauteils (3) ausgelegtes Werkzeug (30).

2. Indizierungsvorrichtung nach Anspruch 1, wobei die Materialhärte des Werkzeuges (30) größer als die von Titan Grad 5 ist.

3. Indizierungsvorrichtung nach Anspruch 1 oder 2, wobei das Laborimplantat (20) Keramikbestandteile und/oder Hartmetallbestandteile umfasst.

4. Indizierungsvorrichtung nach einem der Ansprüche 1 bis 3, wobei das Werkzeug (30) federgelagert ist.

5. Verfahren zur Herstellung eines Dentalimplantates (1) mit einem in einen Kieferknochen einbringbaren Pfostenteil (2) und mit einem diesem zugeordneten Aufbauteil (3), an das ein Zahnersatzstück anbringbar ist, bei dem das Aufbauteil (3) an seinem apikalen Ende zur Anpassung seines Außenquerschnitts an den Innenquerschnitt des Pfostenteils (2) verformt wird, wobei der Außenquerschnitt des Aufbauteils (3) mittels einer Indizierungsvorrichtung nach einem der Ansprüche 1 bis 4 indiziert wird.

6. Verfahren zur Herstellung eines Dentalimplantates (1) nach Anspruch 5, bei dem die Anpassung spanabhebend erreicht wird.

7. Verfahren zur Herstellung eines Dentalimplantates (1) nach Anspruch 5 oder 6, bei dem ein Abformteil mit einer in koronaler Richtung längeren Indizierung als das spätere Aufbauteil (3) zur Übertragung der Indizierung des Pfostenteils (2) auf das Werkzeug (30) des Laborimplantates (20) verwendet wird.

## Claims

1. An indexing device for indexing a superstructure part (3) on which a denture piece can be fastened, as a function of a post part (2) which can be anchored in a jawbone, **characterized by** a laboratory implant (20) which is embedded in a positive model of the patient's mouth situation and which has a configuration corresponding, with regard to connection and geometry, to the post part inserted into the jawbone, as well as by a tool (30) which is located in the laboratory implant (20) and which is configured for machining the outer cross-section of the superstructure part (3) to be anchored in the laboratory implant (20).

2. The indexing device of claim 1, wherein the hardness of the material of the tool (30) is higher than that of titanium grade 5.

3. The indexing device of claim 1 or 2, wherein the laboratory implant (20) comprises ceramic components and/or carbide components.

4. The indexing device of any of claims 1 to 3, wherein the tool (30) is spring-mounted.

5. A method for producing a dental implant (1) having a post part (2) which can be anchored in a jawbone and having a superstructure part (3) associated therewith, on which a denture piece can be fastened, wherein the apical end of the superstructure part (3) is shaped for adapting its outer cross-section to the inner cross-section of the post part (2), the outer cross-section of the superstructure part (3) being indexed by means of an indexing device according to any of claims 1 to 4.

6. The method for producing a dental implant (1) of claim 5, wherein the adaptation is achieved by material removal.

7. The method for producing a dental implant (1) of claim 5 or 6, wherein a molded part with an indexing in coronal direction, which is longer than the eventual superstructure part (3), is used for transmitting the indexing of the post part (2) to the tool (30) of the laboratory implant (20).

## Revendications

1. Dispositif d'indexation pour indexer un élément de montage (3) sur lequel une pièce de prothèse dentaire peut être fixée, en fonction d'un élément de poteau (2) qui peut être ancré dans un os maxillaire, **caractérisé par** un implant de laboratoire (20) qui est inséré dans un modèle positif de la situation de la bouche du patient et dont la configuration correspond, en ce qui concerne la liaison et la géométrie, à l'élément de poteau inséré dans l'os maxillaire, ainsi que par un outil (30) qui se trouve dans l'implant de laboratoire (20) et qui est configuré pour usiner la section extérieure de l'élément de montage (3) à être ancré dans l'implant de laboratoire (20).

2. Dispositif d'indexation selon la revendication 1, dans lequel la dureté du matériau de l'outil (30) est plus grande que celle du titane grade 5.

3. Dispositif d'indexation selon la revendication 1 ou 2, dans lequel l'implant de laboratoire (20) comprend des composants céramiques et/ou des composants en carbure.

4. Dispositif d'indexation selon l'une quelconque des revendications 1 à 3, dans lequel l'outil (30) est monté sur ressort.

5. Procédé pour produire un implant dentaire (1) ayant un élément de poteau (2) qui peut être ancré dans un os maxillaire et ayant un élément de montage (3) y affecté, sur lequel une pièce de prothèse dentaire peut être fixée, dans lequel le bout apical de l'élément de montage (3) est formé pour adapter sa section extérieure à la section intérieure de l'élément de poteau (2), la section extérieure de l'élément de montage (3) étant indexée au moyen d'un dispositif d'indexation selon l'une quelconque des revendications 1 à 4.

6. Procédé pour produire un implant dentaire (1) selon la revendication 5, dans lequel l'adaptation est obtenue par enlèvement de copeaux.

7. Procédé pour produire un implant dentaire (1) selon la revendication 5 ou 6, dans lequel une pièce moulée avec une indexation en direction coronale, qui est plus longue que l'ultérieur élément de montage (3), est utilisée pour transmettre l'indexation de l'élément de poteau (2) à l'outil (30) de l'implant de laboratoire (20).
